# EUROPÄISCHE PATENTANMELDUNG

(11) **EP 3 418 933 A1**
(43) Veröffentlichungstag der Anmeldung: **26.12.2018**
(21) Anmeldenummer: 17176590.2
(22) Anmeldetag: 19.06.2017
(51) Int. Cl.: G06F 21/53

(54) **EDGE-GERÄT UND VERFAHREN ZUM BETRIEB EINES EDGE-GERÄTS**

(71) Anmelder: Siemens Aktiengesellschaft, 80333 München (DE)
(72) Erfinder: Kohler, Benjamin, 90419 Nürnberg (DE); Heindl, Elisabeth, 90556 Cadolzburg (DE); Milovanovic, Igor, 90491 Nürnberg (DE); Riedl, Wolfgang, 90443 Nürnberg (DE)

(57) **Zusammenfassung**

Die Erfindung ist ein Edge-Gerät (10) und ein Verfahren zum Betrieb eines Edge-Geräts (10), wobei das Edge-Gerät (10) um einen Unikernel-Manager (52) sowie einen Basis-Unikernel (54) ergänzt ist, wobei der Unikernel-Manager (52) als Mittel zumindest zum Starten und Stoppen eines auf dem Edge-Gerät (10) installierten Unikernels (40-46) fungiert und wobei der Basis-Unikernel (54) in Form eines eigenständigen Unikernels die Basisfunktionalität des Edge-Geräts 10 umfasst.

## Beschreibung

Die Erfindung betrifft ein Edge-Gerät sowie ein Verfahren zum Betrieb eines Edge-Geräts. Edge-Geräte sind grundsätzlich an sich bekannt und werden oftmals auch als Edge-Devices oder Edge-Gateways bezeichnet. Ein Edge-Gerät fungiert als Schnittstelle zwischen zwei Computernetzwerken, nämlich zum Beispiel zwischen einem ersten Computernetzwerk, mittels dessen zur Steuerung und/oder Überwachung eines technischen Prozesses bestimmte Automatisierungsgeräte in einer sogenannten Feldebene untereinander kommunikativ verbunden sind, und einem zweiten Netzwerk, zum Beispiel der sogenannten Cloud. Mittels des Edge-Geräts kann grundsätzlich jedes zu dem jeweiligen ersten Computernetzwerk gehörende Gerät mit einem Gerät in dem jeweiligen zweiten Computernetzwerk Daten austauschen, zum Beispiel im Rahmen der Steuerung und/oder Überwachung des technischen Prozesses entstehende Daten in der Cloud abspeichern oder dergleichen.

Mit dem Aufkommen von IoT (Internet of Things) Cloud-Plattformen (zum Beispiel Siemens MindSphere, Microsoft Azure IoT, Amazon AWS IoT etc.) und den dazugehörigen Edge-Geräten steigt die Komplexität der Systemarchitekturen im industriellen Umfeld. Die Konnektivität der klassischen Feldebene und der dortigen Edge-Geräte (Edge-Gateways) mit öffentlichen Cloud-Plattformen führt zu neuen Herausforderungen bezüglich der Sicherheit. Heutige Edge-Geräte sind häufig mit einem universellen Betriebssystem (zum Beispiel Linux, Windows etc.) mit einem umfassenden Funktions- und Leistungsspektrum ausgestattet. Software wird darauf nativ installiert. Um diese Geräte gegen Angriffe zu schützen, versucht man, die Systemsoftware (die Gesamtheit aus dem jeweiligen Betriebssystem und der im Folgenden als Basisfunktionalität bezeichneten Gateway-Software) zu "härten", indem nicht benötigte Services oder Komponenten deaktiviert werden. Allerdings sind auch im Falle einer Deaktivierung solche generischen Services oder Komponenten nach wie vor noch im Betriebssystemkernel vorhanden, woraus eine potenziell größere Angriffsfläche resultiert.

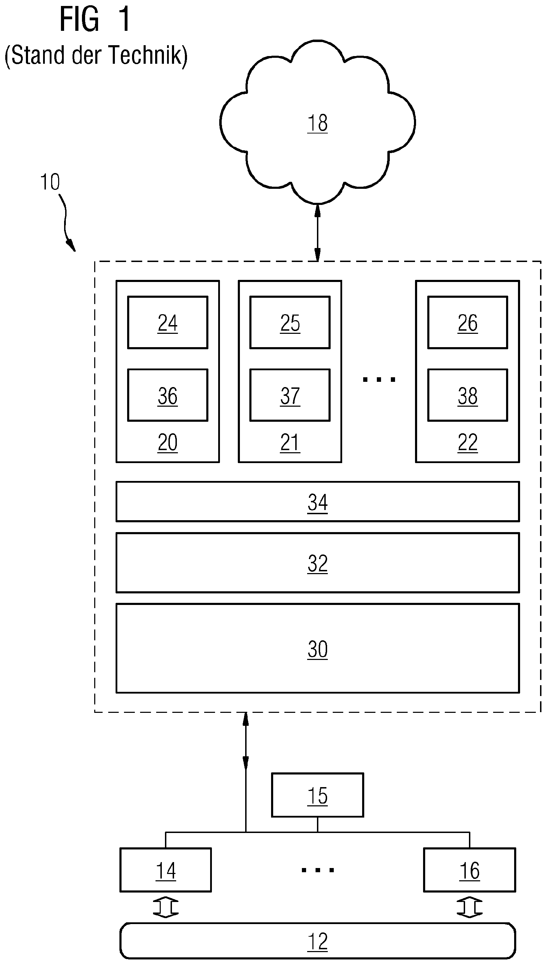

Mittlerweile ist es oftmals erforderlich, dass ein Edge-Gerät nicht nur genau eine dedizierte Funktion übernimmt, sondern parallel mehrere Funktionalitäten bereitstellt. Beispielsweise könnte ein Edge-Gerät einerseits die Konnektivität der Feldebene einer Automatisierungslösung zur Cloud bereitstellen und andererseits eine Applikation anbieten, die eine Vorverarbeitung von Daten aus der Feldebene ermöglicht. Um solche oder ähnliche Funktionalitäten und die oder jede dafür notwendige Applikation dynamisch auf einem Edge-Gerät oder einer Vielzahl von Edge-Geräten zu installieren (Deployment), hat sich die sogenannte Container-Technologie etabliert. Sie ist ein Standardverfahren zum einfachen Paketieren und Verteilen ("Deployen") von Applikationen auf einem Zielgerät oder einer Gruppe von Zielgeräten und es gibt diverse Implementierungen. Im Linux-Umfeld hat sich zum Beispiel die Open-Source-Software "Docker" als Container-Technologie durchgesetzt. Eine Applikation, die als Container paketiert und deployed wird, umfasst neben der oder jeder jeweiligen Applikation eine komplette Laufzeit-Umgebung, also Bibliotheken und/oder Binär- und Konfigurationsdateien, welche zur Ausführung der jeweiligen Applikation(en) notwendig ist und/oder sind. Durch die im Folgenden als Containerisierung bezeichnete Paketierung zumindest einer Applikation und ihrer jeweiligen Laufzeitumgebung in einem Software-Container werden Unterschiede in den diversen Betriebssystem-Distributionen abstrahiert. Die resultierenden Software-Container sind Side-by-Side-fähig, d.h. die darin gekapselten Applikationen können nebeneinander und unabhängig voneinander ausgeführt werden. Eine Eigenheit der Container-Technologie ist jedoch, dass sich alle Software-Container einen gemeinsamen Betriebssystemkernel teilen. Einzelne Software-Container können zwar durch eine entsprechende Netzwerk-Virtualisierung getrennt werden, aber sie setzen alle auf einem gemeinsamen generischen Kernel auf (siehe FIG 1), der eine breite Angriffsfläche bezüglich unter Umständen vorhandener Sicherheitslücken bietet.

Eine Aufgabe der Erfindung besteht entsprechend darin, die potentielle Angreifbarkeit eines Edge-Geräts zu reduzieren und dabei die im Rahmen der Container-Technologie gegebene Flexibilität zu erhalten.

Diese Aufgabe wird erfindungsgemäß mittels eines Edge-Geräts mit den Merkmalen des Anspruchs 1 gelöst. Ein Edge-Gerät ist in grundsätzlich an sich bekannter Art und Weise dafür bestimmt und eingerichtet, als Schnittstelle zum Beispiel zwischen untereinander kommunikativ verbundenen und zur Steuerung und/oder Überwachung eines technischen Prozesses bestimmten Automatisierungsgeräten einerseits und zumindest einem externen oder weiteren Netzwerk andererseits zu fungieren. Nach dem hier vorgeschlagenen Ansatz wird für die Kapselung einer auf dem Edge-Gerät auszuführenden Software-Applikation anstelle der bisher verwendeten Container-Technologie die Unikernel-Technologie verwendet und das Edge-Gerät umfasst dafür zusätzliche in Software implementierte Funktionseinheiten. Eine erste zusätzliche Funktionseinheit wird im Folgenden als Unikernel-Manager bezeichnet. Eine zweite zusätzliche Funktionseinheit wird im Folgenden als Basis-Unikernel bezeichnet. Der Unikernel-Manager fungiert als Mittel zumindest zum Starten und Stoppen eines auf dem Edge-Gerät installierten Unikernels und ist entsprechend dafür bestimmt und eingerichtet, beim Betrieb des Edge-Geräts bedarfsweise einen auf dem Edge-Gerät installierten Unikernel zu starten oder zu stoppen. Der Basis-Unikernel umfasst in Form eines eigenständigen Unikernels die Basisfunktionalität des Edge-Geräts, also diejenige Funktionalität, die es dem Edge-Gerät erlaubt, als Schnittstelle zwischen vernetzten Automatisierungsgeräten einerseits und einem weiteren Netzwerk andererseits zu fungieren.

Bei einem Verfahren zum Betrieb eines solchen Edge-Geräts wird mittels des Unikernel-Managers bedarfsweise und automatisch ein auf dem Edge-Gerät installierter Unikernel gestartet oder gestoppt und mittels des Basis-Unikernels wird die Basisfunktionalität des Edge-Geräts abgewickelt.

Der Vorteil der Erfindung besteht darin, dass die oder jede mittels des Edge-Geräts auszuführende Applikation in aus Sicherheitserwägungen besonders günstiger Art und Weise in einem Unikernel gekapselt ist. Darüber hinaus bietet ein Unikernel in Bezug auf die Kapselung einer oder mehrerer Applikationen dieselben Vorteile wie ein Software-Container. Speziell sind Unikernel ebenfalls Side-by-Side-fähig, so dass auch hier die darin gekapselten Applikationen nebeneinander und unabhängig voneinander auf dem Edge-Gerät ausgeführt werden können.

Der reduzierte Ansatz der Unikernel-Technologie kommt der Sicherheit einerseits des Edge-Geräts und andererseits des Gesamtsystems, in dem das Edge-Gerät seine Schnittstellenfunktion erfüllt, zugute. Viele Services eines traditionellen Kernels sind von dem oder jedem auf dem Edge-Gerät installierten und mittels des Unikernel-Managers überwachten (Starten, Stoppen etc.) Unikernel nicht umfasst oder sind zumindest deutlich reduziert. Die resultierende abnehmende Komponentenanzahl (Services, die auf einem Edge-Gerät laufen) führt folglich zu einer erheblichen Verringerung der Angreifbarkeit des Edge-Geräts. Zudem können Unikernel bis auf die Ebene des Hypervisors (zum Beispiel Xen-Hypervisor) isoliert werden, während bei herkömmlichen Software-Containern die Isolation als unterste Ebene nur den Kernel umfasst. Indem ein Unikernel gestartet (gebootet, hochgefahren) oder gestoppt (beendet, heruntergefahren) werden kann, kann die Funktionalität eines Edge-Geräts der hier vorgeschlagenen Art dynamisch angepasst werden. Insoweit kann zum Beispiel eine zusätzliche Funktionalität durch Starten eines weiteren Unikernels und der zumindest einen darin gekapselten Applikation hinzugefügt werden und/oder eine nicht mehr benötigte Funktionalität durch Stoppen des jeweiligen Unikernels deaktiviert werden. Im Falle einer während des Betrieb des Edge-Geräts bekannt werdenden Sicherheitslücke muss nur der oder jeder Unikernel deaktiviert werden, der von der Sicherheitslücke betroffen ist, während alle anderen Unikernel auf dem Edge-Gerät ohne Funktionseinbußen weiterlaufen können. Bei einem Edge-Gerät, welches ein übliches Betriebssystem verwendet oder Container-Technologien nutzt, müsste das komplette Edge-Gerät deaktiviert oder zum Beispiel der Kernel gepatcht werden.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Edge-Geräts oder eines Verfahrens zu dessen Betrieb nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier vorgeschlagene Edge-Gerät auch entsprechend der abhängigen Verfahrensansprüche weitergebildet sein kann, zum Beispiel indem das Edge-Gerät entsprechende Mittel umfasst, welche zur Ausführung des jeweiligen Verfahrensschritts oder der jeweiligen Verfahrensschritte bestimmt und eingerichtet sind, und umgekehrt.

Bei einer Ausführungsform des Edge-Geräts und eines Verfahrens zu dessen Betrieb ist mittels des Basis-Unikernels eine einen kompromittierten Unikernel identifizierende Kennung empfangbar und wird mittels des Basis-Unikernels empfangen und mittels des Unikernel-Managers ist der oder jeder durch die empfangene Kennung identifizierte Unikernel stoppbar und wird mittels des Basis-Unikernels gestoppt. Auf einfache Art und Weise können damit Funktionen, die das Edge-Gerät angreifbar machen, gewissermaßen ausgeschaltet werden. Mit dem Stoppen eines kompromittierten Unikernels ist dieser von außen nicht mehr sichtbar und die Angreifbarkeit entfällt.

Bei einer weiteren Ausführungsform des Edge-Geräts und eines Verfahrens zu dessen Betrieb ist mittels des Basis-Unikernels ein in einem von dem Edge-Gerät entfernten, aber für das Edge-Gerät erreichbaren Unikernel-Depot vorgehaltener Unikernel aus dem Unikernel-Depot herunterladbar und auf dem Edge-Gerät installierbar und wird beim Betrieb des Edge-Geräts bedarfsweise heruntergeladen und auf dem Edge-Gerät installiert. Auf diese Weise kann durch Installation zumindest eines weiteren Unikernels die Funktionalität des Edge-Geräts dynamisch um die Funktionalität der zumindest einen in dem jeweiligen Unikernel gekapselten Applikation erweitert werden. Genauso kann anstelle eines kompromittierten und deaktivierten Unikernels ein den kompromittierten Unikernel ersetzender, fehlerbereinigter Unikernel geladen und installiert werden, so dass die Funktionalität des Edge-Geräts erhalten bleibt.

Bei einer speziellen Ausführungsform des Edge-Geräts und eines Verfahrens zu dessen Betrieb ist mittels des Basis-Unikernels eine elektronische Signatur eines in dem Unikernel-Depot vorgehaltenen oder aus dem Unikernel-Depot heruntergeladenen Unikernels überprüfbar und wird beim Betrieb überprüft. Dies gewährleistet, dass ein manipulierter Unikernel erkennbar ist und die Manipulation im Zusammenhang mit dem Herunterladen erkannt wird. Bei einer erkannten Manipulation kann zum Beispiel vorgesehen sein, dass der betroffene Unikernel erst gar nicht aus dem Unikernel-Depot heruntergeladen wird oder nicht auf dem Edge-Gerät installiert wird, zumindest nicht ohne Weiteres gestartet wird.

Bei einer zusätzlichen oder alternativen speziellen Ausführungsform des Edge-Geräts und eines Verfahrens zu dessen Betrieb ist mittels des Basis-Unikernels ein aus dem Unikernel-Depot heruntergeladener Unikernel entschlüsselbar, zum Beispiel mittels eines von einer Hardware des Edge-Geräts umfassten TPM-Chips, und wird beim Betrieb im Zusammenhang mit dem Herunterladen entschlüsselt. Dies gewährleistet, dass in dem Unikernel eventuell enthaltene sensible Daten für Dritte nicht einsehbar sind.

Der Unikernel-Manager und der Basis-Unikernel sind in Form eines Computerprogramms realisiert und beim Betrieb des Edge-Geräts in einen Speicher des Edge-Geräts geladen. Die Erfindung ist damit einerseits auch ein als Unikernel-Manager und/oder als Basis-Unikernel fungierendes Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Edge-Gerät, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: ein Edge-Gerät mit einem auf dessen Hardware aufsetzenden Betriebssystem sowie einer auf dem Betriebssystem aufsetzenden Container-Engine zur Ausführung zumindest einer in einem Container gekapselten Software-Applikation auf dem Edge-Gerät,
- FIG 2: ein Edge-Gerät nach dem hier vorgeschlagenen Ansatz, wobei Software-Applikationen, die auf dem Edge-Gerät ausgeführt werden sollen, in einem oder mehreren Unikerneln gekapselt sind, die Ausführung des oder jedes Unikernels mittels eines Unikernel-Managers gesteuert und überwacht wird und auch die Basisfunktionalität des Edge-Geräts in einem eigenen Unikernel gekapselt ist, und
- FIG 3: eine weitere Darstellung des Edge-Geräts gemäß FIG 2 sowie eine zur automatischen Deaktivierung eines Unikernels auswertbare und vom Edge-Gerät empfangbare, einen zu deaktivierenden, kompromittierten Unikernel identifizierende Kennung.

Die Darstellung in FIG 1 zeigt schematisch vereinfacht ein im Folgenden mitunter auch kurz als Gerät bezeichnetes Edge-Gerät (Edge-Device, Edge-Gateway) 10.

Das Edge-Gerät 10 fungiert gemäß dem beispielhaft gezeigten Szenario in grundsätzlich an sich bekannter Art und Weise als Schnittstelle zwischen untereinander kommunikativ verbundenen sowie zur Steuerung und/oder Überwachung eines nicht näher gezeigten technischen Prozesses 12 bestimmten Automatisierungsgeräten 14, 15, 16 einerseits und zumindest einem externen Netzwerk, zum Beispiel der sogenannten Cloud 18, anderseits.

Bei einem bekannten, zur Ausführung von in Software-Containern 20, 21, 22 gekapselten Applikationen 24, 25, 26, bestimmten Edge-Gerät 10 setzt auf einer jeweiligen Hardware 30 des Geräts ein Betriebssystem 32 auf. Auf diesem setzt wiederum eine als Container-Hypervisor 34 fungierende jeweilige Container-Engine auf, zum Beispiel eine Docker-Engine, welche in grundsätzlich an sich bekannter Art und Weise die Ausführung zumindest einer in einem Software-Container 20-22 gekapselten (containerisierten) Applikation 24-26 erlaubt. Der jeweilige Software-Container 20-22 umfasst die zur Ausführung der oder jeder in dem Container 20-22 gekapselten Applikation 24-26 notwendige Laufzeitumgebung 36, 37, 38, also zum Beispiel Binärdatein, Bibliotheken, Konfigurationsdateien etc.

Wie die vereinfachte Darstellung in FIG 1 zeigt, dient ein gegebenenfalls in Bezug auf einzelne Services oder Komponenten reduziertes Betriebssystem 32 als Basis für die als Container-Hypervisor 34 fungierende Container-Engine. Auch bei einem eventuell in dieser Form reduzierten Betriebssystem 32 handelt es sich immer noch um ein Betriebssystem 32 mit umfassender Kernelfunktionalität.

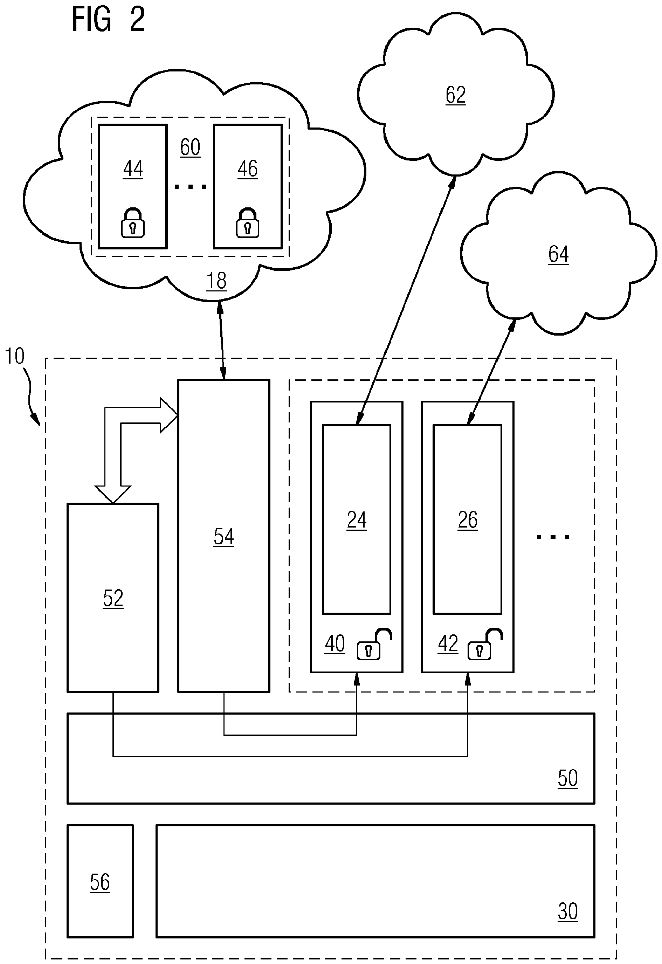

In Konkurrenz zu einem Betriebssystem 32 mit umfassender Kernelfunktionalität hat sich die sogenannte Unikernel-Technologie etabliert. Unikernel Softwarestacks verwenden keinen kompletten Betriebssystemkernel, sondern stellen genau diejenigen Betriebssystem-Komponenten bereit, die von einer jeweiligen Applikation benötigt werden. Die Unikernel-Technologie basiert auf dem sogenannten Library-OS-Ansatz, nach dem sowohl die Basisfunktionalität, wie zum Beispiel Treiber, Netzwerkstack, Dateisystem etc., wie auch die jeweilige Applikation 24-26 (FIG 2) selbst in ein eigenständiges Image (Unikernel-Image) 40, 42, 44, 46 (FIG 2) kompiliert werden, welches direkt auf einem Unikernel-Hypervisor 50 (FIG 2) gestartet werden kann. Dies führt zu kompakten (schlanken) Images 40, 42 und ermöglicht ein schnelles Laden oder Booten (wenige Millisekunden) der jeweiligen Applikation 24-26. Durch die Integration einer Unikernel-Hypervisor-Infrastruktur auf einem Edge-Gerät 10 ist es somit möglich, Unikernel-Images 40-46 zu booten und zu beenden.

Nach dem hier vorgeschlagenen Ansatz wird das Edge-Gerät 10 mit zusätzlichen Software-Komponenten erweitert und die Darstellung in FIG 2 zeigt dies schematisch vereinfacht. Bei den zusätzlichen Software-Komponenten handelt es sich um den bereits erwähnten, auf der Hardware 30 des Edge-Geräts 10 aufsetzenden Unikernel-Hypervisor 50 sowie zum einen um einen Unikernel-Manager 52 und zum anderen um ein Basis-Unikernel Image 54. Im Interesse einer besseren Lesbarkeit der weiteren Beschreibung wird ein Unikernel Image im Folgenden kurz als Unikernel bezeichnet. Folglich wird das Basis-Unikernel Image 54 als Basis-Unikernel 54 bezeichnet.

Auch das Edge-Gerät 10 gemäß FIG 2 fungiert zum Beispiel als Schnittstelle zwischen untereinander kommunikativ verbundenen Automatisierungsgeräten 14-16 einerseits und zumindest einem externen oder weiteren Netzwerk 18 anderseits, wie dies in der Darstellung in FIG 1 gezeigt ist. Die mittels eines Bussystems oder dergleichen kommunikativ verbundenen Automatisierungsgeräte 14-16 und der gemäß einer Automatisierungslösung gesteuerte und/oder überwachte technische Prozess 12 sind hier nicht erneut gezeugt. Der technische Prozess 12 und die vernetzten Automatisierungsgeräte 14-16 werden im Folgenden mitunter zusammen kurz als Feldebene bezeichnet.

Der Unikernel-Manager 52 fungiert als Mittel zur Verwaltung eines Unikernels 40-46 oder mehrerer Unikernel 40-46, insbesondere als Mittel zum Starten und zum Stoppen jeweils eines Unikernels 40-46. Optional ist der Unikernel-Manager 52 nach dem hier vorgeschlagenen Ansatz dafür bestimmt und eingerichtet, einen verschlüsselten Unikernel 40-46 zu entschlüsseln, bevor dieser gestartet wird. Hierfür verwendet er einen privaten Schlüssel, der sich zum Beispiel auf einem sogenannten TPM-Chip (TPM = Trusted Platform Module) 56 des jeweiligen Edge-Geräts 10 befindet.

Der Basis-Unikernel 54 umfasst in Form eines eigenständigen Unikernels die Basisfunktionalität des Edge-Geräts 10. Zur grundsätzlich an sich bekannten Basisfunktionalität eines Edge-Geräts 10 gehört insbesondere der Aufbau einer Punkt-zu-Punkt-Verbindung mittels Ethernet und/oder ATM, Bewertung einer Güte eines Kommunikationsdienstes (Quality-of-Service), Handhabung und/oder Umsetzung unterschiedlicher Datenströme (Multi-Service, Translation), Routing und dergleichen.

Optional ist der Basis-Unikernel 54 oder auch ein den Basis-Unikernel 54 ergänzender weiterer Basis-Unikernel 54 dafür bestimmt und eingerichtet, als Schnittstelle zur Kommunikation mit zumindest einem Unikernel-Depot (Unikernel-Hub) 60 zu fungieren. In dieser Eigenschaft fungiert der Basis-Unikernel 54 als Mittel zum Herunterladen eines Unikernels 44, 46 aus dem Unikernel-Depot 60 und zum Installieren (Deployen) des heruntergeladenen Unikernels 44, 46 auf dem jeweiligen Edge-Gerät 10.

Der oder jeder in einem Unikernel-Depot 60 vorgehaltene Unikernel 44, 46 umfasst - wie oben beschrieben - die oder jede in dem jeweiligen Unikernel 44, 46 gekapselte, ausführbare (kompilierte) Applikation 24-26 sowie (in ebenfalls kompilierter Form) Bibliotheksfunktionen und dergleichen. Jeder in einem Unikernel-Depot 60 vorgehaltene Unikernel 44, 46 ist vor seiner Hinzufügung zum Unikernel-Depot 60 auf einem lokalen Rechner (nicht gezeigt) kompiliert und optional digital signiert und/oder verschlüsselt und sodann zum Unikernel-Depot 60 übertragen worden. Als Unikernel-Depot 60 fungiert zum Beispiel ein ggf. auch verteilter Speicher in der Cloud 18.

Bei einem in grundsätzlich an sich bekannter Art und Weise signierten (zum Beispiel mittels CRC, RSA, SHA etc.) Unikernel 40-46 kann vor dem Starten des Unikernels 40-46 durch eine mittels des Basis-Unikernels 54 automatisch ausgeführte Überprüfung der digitalen Signatur die Authentizität des heruntergeladenen Unikernels 40-46 sichergestellt werden und des Weiteren sichergestellt werden, dass der Unikernel 40-46 nicht manipuliert wurde. Bei einem digital signierten Unikernel 40-46 und einer von dem Basis- Unikernel 54 automatisch ausgeführten Überprüfung der digitalen Signatur wird der heruntergeladene Unikernel 40-46 vom Basis-Unikernel 54 nur dann gestartet, wenn die Prüfung der digitalen Signatur fehlerfrei abgeschlossen werden konnte. Wenn dies nicht der Fall ist, wird der heruntergeladene Unikernel 40-46 nicht gestartet und optional aus dem Speicher des Edge-Geräts 10 gelöscht.

Bei einem in grundsätzlich an sich bekannter Art und Weise verschlüsselten (zum Beispiel mittels AES, RSA, SHA etc.) Unikernel 40-46 kann vor dem Starten des Unikernels 40-46 durch eine mittels des Basis-Unikernels 54 automatisch ausgeführte Entschlüsselung ebenfalls die Authentizität des heruntergeladenen Unikernels 40-46 sichergestellt werden und des Weiteren sichergestellt werden, dass der Unikernel 40-46 nicht manipuliert wurde. Bei einem digital verschlüsselten Unikernel 40-46 und einer vom Basis-Unikernel 54 automatisch ausgeführten Entschlüsselung kann der heruntergeladene Unikernel 40-46 vom Basis-Unikernel 54 nur dann gestartet werden, wenn der Vorgang der Entschlüsselung fehlerfrei abgeschlossen werden konnte. Wenn dies nicht der Fall ist, wird der heruntergeladene Unikernel 40-46 nicht gestartet und optional aus dem Speicher des Edge-Geräts 10 gelöscht. Bei einem verschlüsselten Unikernel 40-46 ist zudem sichergestellt, dass darin zum Beispiel enthaltene Zugangsdaten, zum Beispiel Zugangsdaten zu Cloud-Endpoints, oder Zertifikate und dergleichen nicht kompromittiert sind und missbraucht werden können.

Die Darstellung in FIG 2 zeigt eine Situation mit einem Edge-Gerät 10 mit einem ersten Unikernel 40 und einem zweiten Unikernel 42. Beide wurden zum Beispiel mittels des Basis-Unikernels 54 aus dem Unikernel-Depot 60 heruntergeladen. Der erste Unikernel 40 umfasst zum Beispiel eine Applikation 24 zur Kommunikation mit einer privaten Cloud 62. Die in dem ersten Unikernel 40 gekapselte Applikation 24 fungiert insoweit zum Beispiel als Archiv-Applikation und umfasst dafür in kompilierter Form die Programmcodeanweisungen, welche die Funktion der Applikation 24 bestimmen, sowie zur Ausführung der Applikation 24 eventuell notwendige Bibliotheksfunktionen und dergleichen, zum Beispiel Bibliotheksfunktionen zum Zugriff auf die jeweilige Hardware 30 des Edge-Geräts 10. Mittels des ersten Unikernels 40 erfolgt dann zum Beispiel eine Archivierung von Daten aus der Feldebene eines jeweils gesteuerten und/oder überwachten, hier nicht gezeigten technischen Prozesses 12 (FIG 1). Der zweite Unikernel 42 umfasst zum Beispiel eine Applikation 26 zur Kommunikation mit einer sogenannten MindSphere-Cloud 64. Die in dem zweiten Unikernel 42 gekapselte Applikation 26 ist insoweit zum Beispiel eine Applikation 26 zur Vorverarbeitung, Filterung oder Ähnlichem von aus der Feldebene des technischen Prozesses 12 stammenden Daten und umfasst ansonsten in kompilierter Form ebenfalls die Programmcodeanweisungen, welche die Funktion der Applikation 26 bestimmen, sowie zur Ausführung der Applikation 26 eventuell notwendige Bibliotheksfunktionen und dergleichen, zum Beispiel Bibliotheksfunktionen zum Zugriff auf die jeweilige Hardware 30 des Edge-Geräts 10.

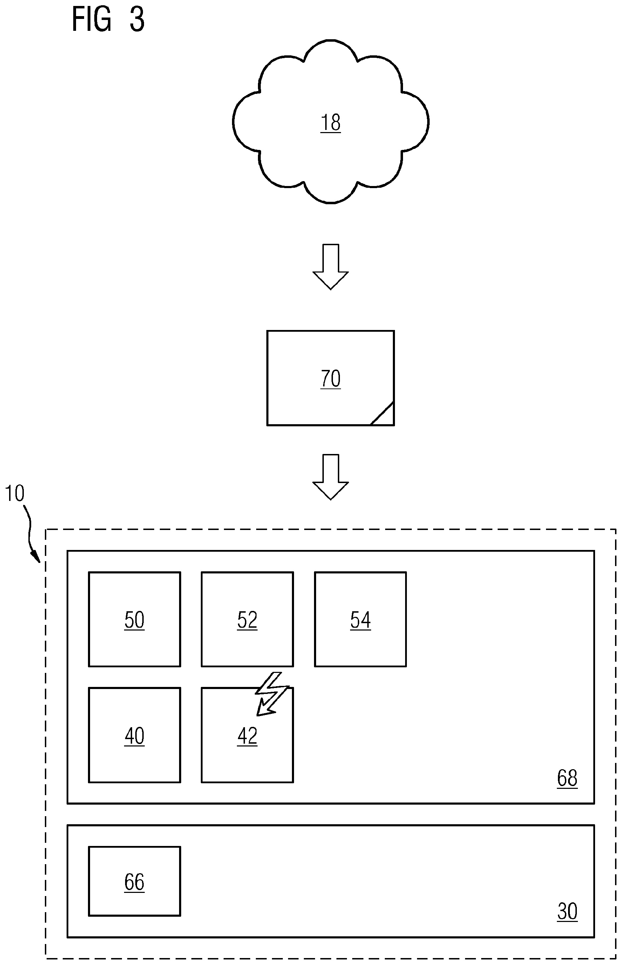

FIG 3 zeigt eine weitere Darstellung des Edge-Geräts 10 gemäß FIG 2. Danach umfasst das Edge-Gerät 10 in üblicher Art und Weise als Bestandteil von dessen Hardware 30 eine Verarbeitungseinheit 66 in Form von oder nach Art eines Mikroprozessors. Mittels der Verarbeitungseinheit 66 werden beim Betrieb des Edge-Geräts 10 der Unikernel-Hypervisor 50, der Unikernel-Manager 52, der Basis-Unikernel 54 sowie der oder jeder auf dem Edge-Gerät 10 installierte und zur Ausführung vorgesehene Unikernel 40, 42, insbesondere zur Ausführung freigeschaltete Unikernel 40, 42, ausgeführt. Beim Unikernel-Hypervisor 50, Unikernel-Manager 52, Basis-Unikernel 54 und dem oder jedem Unikernel 40, 42 handelt es sich insoweit um unabhängig voneinander ausführbare Computerprogramme, die in grundsätzlich an sich bekannter Art und Weise in einen Speicher 68 des Edge-Geräts 10 ladbar und beim Betrieb des Edge-Geräts 10 in diesen Speicher 68 geladen sind.

Wenn sich beim Betrieb des Edge-Geräts 10 ergeben sollte, dass ein auf dem Edge-Gerät 10 installierter Unikernel 40-46 kompromittiert ist, also einen Angriff in Form eines unberechtigten Zugriffs auf das Edge-Gerät 10 oder über das Edge-Gerät 10 erreichbare Geräte erlaubt, ist Folgendes vorgesehen: Im Falle einer erkannten derartigen Kompromittierung wird dem Edge-Gerät 10 eine den betroffenen Unikernel 40-46 identifizierende Kennung 70 übermittelt. Das Aussenden der Kennung 70 erfolgt von einer zentralen Instanz, zum Beispiel über die Cloud 18, und wird zum Beispiel durch einen Experten des Anbieters des Edge-Geräts 10, einen Experten des Anbieters des betroffenen Unikernels 40-46 oder dergleichen veranlasst. Auf Seiten des Edge-Geräts 10 empfängt der Basis-Unikernel 54 die den kompromittierten Unikernel 40-46 identifizierende Kennung 70. Dieser übermittelt intern die empfangene Kennung 70 an den Unikernel-Manager 52. Dieser stoppt aufgrund der empfangenen Kennung 70 den oder jeden durch die empfangene Kennung 70 identifizierten und bisher durch das Edge-Gerät 10 ausgeführten Unikernel 40-46 (in der Darstellung in FIG 3 den mit dem Blitzsymbol markierten Unikernel 42). Die Angreifbarkeit des Edge-Geräts 10 aufgrund des kompromittierten Unikernels 42 ist damit unmittelbar beseitigt. Optional kann der oder jeder kompromittierte Unikernel 42 durch den Unikernel-Manager 52 aus dem Speicher 68 des Edge-Geräts 10 gelöscht werden. Ein auf diese Weise zumindest deaktivierter und gegebenenfalls aus dem Speicher 68 gelöschter Unikernel 42 kann zum Beispiel durch späteres Herunterladen eines neuen, fehlerbereinigten Unikernels 40-46 aus dem Unikernel-Depot 60 ersetzt werden. Dann ist die ursprüngliche Funktionalität des Edge-Geräts 10 wiederhergestellt. Zwischenzeitlich kann das Edge-Gerät 10 und jeder von der Kompromittierung nicht betroffene Unikernel 40-46 weiterlaufen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Edge-Gerät 10 und ein Verfahren zu dessen Betrieb, wobei das Edge-Gerät 10 um eine als Unikernel-Manager 52 sowie eine als Basis-Unikernel 54 fungierende Softwarefunktionalität in Form jeweils eines Computerprogramms oder eines Computerprogrammmoduls ergänzt ist. Der Unikernel-Manager 52 fungiert als Mittel zumindest zum Starten und Stoppen eines auf dem Edge-Gerät 10 installierten Unikernels 40-46 und bewirkt beim Betrieb des Edge-Geräts 10 ein bedarfsweises automatisches Starten oder Stoppen eines auf dem Edge-Gerät 10 installierten Unikernels 40-46. Der Basis-Unikernel 54 umfasst in Form eines eigenständigen Unikernels die Basisfunktionalität des Edge-Geräts 10 und wird beim Betrieb des Edge-Geräts 10 ausgeführt, damit die Basisfunktionalität des Edge-Geräts 10 zu Verfügung steht, damit also das Edge-Gerät 10 in grundsätzlich an sich bekannter Art eine kommunikative Verbindung zu einem anderen Gerät aufbauen kann. Bei einem solchen anderen Gerät handelt es sich zum Beispiel um ein entferntes Gerät in einem entfernten weiteren Netzwerk oder ein Gerät in dem Netzwerk, zu dem das Edge-Gerät 10 gehört. Im Rahmen einer solchen kommunikativen Verbindung kann das Edge-Gerät 10 mittels der Basisfunktionalität in ebenfalls grundsätzlich an sich bekannter Art Daten von einem solchen Gerät empfangen oder an ein solches Gerät senden.

## Patentansprüche

1. Edge-Gerät (10),
welches dafür bestimmt und eingerichtet ist, als Schnittstelle zwischen untereinander kommunikativ verbundenen und zur Steuerung und/oder Überwachung eines technischen Prozesses (12) bestimmten Automatisierungsgeräten (14-16) einerseits und zumindest einem externen Netzwerk (18) anderseits zu fungieren,
**gekennzeichnet durch**
einen Unikernel-Manager (52) sowie einen Basis-Unikernel (54),
wobei der Unikernel-Manager (52) als Mittel zumindest zum Starten und Stoppen eines auf dem Edge-Gerät (10) installierten Unikernels (40-46) fungiert und
wobei der Basis-Unikernel (54) in Form eines eigenständigen Unikernels die Basisfunktionalität des Edge-Geräts 10 umfasst.

2. Edge-Gerät (10) nach Anspruch 1,
wobei mittels des Basis-Unikernels (54) eine einen kompromittierten Unikernel (40-46) identifizierende Kennung (70) empfangbar ist und
wobei mittels des Unikernel-Managers (52) der oder jeder durch die empfangene Kennung (70) identifizierte Unikernel (40-46) stoppbar ist.

3. Edge-Gerät (10) nach Anspruch 1 oder 2,
wobei mittels des Basis-Unikernels (54) ein in einem von dem Edge-Gerät (10) entfernten Unikernel-Depot (60) vorgehaltener Unikernel (44, 46) aus dem Unikernel-Depot (60) herunterladbar und auf dem Edge-Gerät (10) installierbar ist.

4. Edge-Gerät (10) nach Anspruch 3,
wobei mittels des Basis-Unikernels (54) eine elektronische Signatur eines in dem Unikernel-Depot (60) vorgehaltenen oder aus dem Unikernel-Depot (60) heruntergeladenen Unikernels (44, 46) überprüfbar ist.

5. Edge-Gerät (10) nach Anspruch 3 oder 4,
wobei mittels des Basis-Unikernels (54) ein aus dem Unikernel-Depot (60) heruntergeladener Unikernel (44, 46) entschlüsselbar ist.

6. Edge-Gerät (10) nach Anspruch 5,
wobei mittels des Basis-Unikernels (54) ein aus dem Unikernel-Depot (60) heruntergeladener Unikernel (44, 46) mittels eines von einer Hardware (30) des Edge-Geräts (10) umfassten TPM-Chips (56) entschlüsselbar ist.

7. Verfahren zum Betrieb eines Edge-Geräts (10) nach einem der vorangehenden Ansprüche,
wobei mittels des Unikernel-Managers (52) bedarfsweise ein auf dem Edge-Gerät (10) installierter Unikernel (40-46) gestartet oder gestoppt wird und
wobei mittels des Basis-Unikernels (54) die Basisfunktionalität des Edge-Geräts (10) abgewickelt wird.

8. Verfahren nach Anspruch 7,
wobei mittels des Basis-Unikernels (54) eine einen kompromittierten Unikernel (40-46) identifizierende Kennung (70) empfangen wird,
wobei der Basis-Unikernel (54) die empfangene Kennung (70) an den Unikernel-Manager (52) übermittelt und
wobei mittels des Unikernel-Managers (52) der oder jeder durch die empfangene Kennung (70) identifizierte Unikernel (40-46) gestoppt wird.

9. Verfahren nach Anspruch 7 oder 8,
wobei mittels des Basis-Unikernels (54) ein in einem von dem Edge-Gerät (10) entfernten Unikernel-Depot (60) vorgehaltener Unikernel (44, 46) aus dem Unikernel-Depot (60) heruntergeladen und auf dem Edge-Gerät (10) installiert wird.

10. Verfahren nach Anspruch 7, 8 oder 9,
wobei mittels des Basis-Unikernels (54) eine elektronische Signatur eines in dem Unikernel-Depot (60) vorgehaltenen oder aus dem Unikernel-Depot (60) heruntergeladenen Unikernels (44, 46) überprüft wird und/oder ein aus dem Unikernel-Depot (60) heruntergeladener Unikernel (44, 46) entschlüsselt wird.

11. Computerprogramm mit Programmcodemitteln, um alle Schritte von jedem beliebigen der Ansprüche 7 bis 10 durchzuführen, wenn das Computerprogramm als Unikernel-Manager (52) oder Basis-Unikernel (54) auf einem Edge-Gerät (10) nach einem der Ansprüche 1 bis 6 ausgeführt wird.

12. Edge-Gerät (10) nach einem der Ansprüche 1 bis 6,
mit einer Verarbeitungseinheit (66) und einem Speicher (68), in den ein Computerprogramm nach Anspruch 11 geladen ist, das beim Betrieb des Edge-Geräts (10) durch die Verarbeitungseinheit (66) ausgeführt wird.
